# EUROPEAN PATENT SPECIFICATION

(11) **EP 3 900 309 B1**
(45) Date of publication and mention of the grant of the patent: **18.05.2022**
(21) Application number: 20709213.1
(22) Date of filing: 11.03.2020
(51) Int. Cl.: H04L 29/08, G06Q 10/04, B63C 9/28

(54) **SHIP EVACUATION SYSTEM**
SCHIFFSEVAKUIERUNGSSYSTEM
SYSTÈME D'ÉVACUATION DE NAVIRE

(30) Priority: 15.03.2019 EP 19163192; 28.10.2019 LU 101457
(43) Date of publication of application: 27.10.2021
(60) Divisional application: 21213587.5
(73) Proprietor: Luxembourg Institute of Science and Technology (LIST), 4362 Esch-sur-Alzette (LU)
(72) Inventor: ALIPOUR SARVARI, Peiman, 4437 Soleuvre (LU); NICOLAS, Damien, 4282 Esch-sur-Alzette (LU)
(74) Representative: Lecomte & Partners
(86) International application number: PCT/EP2020/056527
(87) International publication number: WO 2020/187668

(56) References cited:
- EP-A1- 3 276 572
- ERIK VANEM ET AL: "Evaluating the cost-effectiveness of a monitoring system for improved evacuation from passenger ships", SAFETY SCIENCE, vol. 48, no. 6, 1 July 2010 (2010-07-01), pages 788-802, XP055502337, AMSTERDAM, NL ISSN: 0925-7535, DOI: 10.1016/j.ssci.2010.02.014

## Description

### Field of the invention

The invention is directed to the field of evacuations of people out of a venue upon occurrence of an emergency situation. The invention is more particularly related to the evacuation of a passenger ship.

### Background art

The European granted patent EP 3 125 205 B1 discloses an individual evacuation plan generation system which notifies individuals via mobile device indications about how to exit a building. The location of the occupants is controlled by radio waves and a safe path calculator calculates the safest route to exit the building for each occupant.

Document EP 3 276 572 A1 discusses a system for the evacuation of a ship.

These systems can still be improved. Firstly, these systems base the calculation on static data. Should the threat actually change location or evolve, the calculator may lead the occupants in a non-appropriate direction. As the emergency exits are treated as static, these systems may direct people towards an emergency exit that has become dangerous or blocked due to the emergency situation. Secondly, the system of EP 3 125 205 B1 is limited to a relatively simple venue, with only a few occupants, and a few possible exit routes. In a situation where there are several thousands of occupants and tens of possible exits, the calculation of optimal routes would take too long, and by the time the calculation is finished, the occupant will have moved already, rendering the calculation void. When the number of occupants and the number of exits increases, the computation time and hence the required resources in terms of memory or computing capacity, increase exponentially. The simulation of the exit paths for thousands of persons towards tens of exits needs an optimisation computation in a space of several thousands of dimensions. Such a simulation can take, at best, several hours. Since every second counts when people attempt to exit a venue, the system of the prior art is thus not suitable for helping a safe evacuation of a passenger ship.

### Summary of the invention

### Technical problem

The invention aims at providing a system and a method allowing a safer evacuation of a ship. The system and the method proposed are such that the resources required for the safer evacuation in terms of memory or computing power are reduced.

### Technical solution

The invention is directed to a system for assisting the routing of people in their way out of a ship, the system comprising: a digital layout of the ship; a hazardous event detection device, detecting the occurrence and the localisation of a hazardous event; a plurality of mobile devices; a local network communication system, LNC, permitting communication between the mobile devices; an indoor location tracking system, ILTS, comprising means for localizing the real-time position of each mobile devices and/or a network of cameras and a convolutional neural network analysing data received from the cameras for localizing each passenger through Face-Body-Object recognition; a database of pre-simulated scenarios of evacuation, comprising an optimum evacuation plan based on the digital layout of the ship, properties of the hazardous event and the localisation of the passengers; an AI-based rescue system comprising: an estimation module which estimates the duration of evacuation and death toll for several evacuation plans, based on the hazardous event, on the real-time position of the passengers and on the pre-simulated scenarios, and selects an optimal evacuation plan and/or offers the responsible of the evacuation to select an evacuation plan potentially amongst a pre-selection of evacuation plans established by the estimation module; an emergency state planning module providing respective directions to each passenger for evacuating the ship according to the selected evacuation plan; a lost passenger identification module which identifies a lost passenger based on a comparison between the real-time positions of the passengers and the selected evacuation plan, and/or based on data retrieved from the LNC; wherein upon detection of a lost passenger, the AI-based rescue system performs at least one of the following actions: informing the responsible of the evacuation of the identification and possibly the location of the lost passenger; instructing crew members to assist the lost passenger; broadcasting oral or optical assistance to the lost passenger through the speakers of the ship or through floor lights appropriately lit up; broadcasting the physical characteristics of the lost passenger; updating the evacuation plan based on the location and physical condition of the lost passenger.

The network of cameras and the convolution neural network may identify individuals as well as their behaviour (running, walking, and if so, at which speed; standing; lying down immobile; suffering; in heat (through IR cameras), etc.).

The properties of the hazardous event may be its location, intensity (if it is a fire), nature, etc.

A lost passenger is automatically detected as lost upon the system detecting a particular behaviour, such as, but not only, the non-observance of the path that a passenger is expected to follow. The system of the invention allows to detect a lost passenger irrespective of whether such passenger carries along a mobile device or not.

The physical characteristics of an individual can comprise his/her general appearance, height, hair colour, age, garments, etc.

The physical condition can comprise any injury, disability, or other particular condition restricting the movement of a passenger or his/her access to particular exit routes.

According to a preferred embodiment, a passenger is identified as lost if at least one of the following conditions is met: the ILTS detects that the passenger remains immobile for a duration exceeding a pre-determined threshold; the detected movements of the passenger show that he/she is neither following instructions towards the designated exit nor towards any other available exits; the AI-based rescue system is alerted by other passengers or crew members that a passenger is lost; the passenger reports himself/herself as lost; a text mining tool analysing text exchanges on mobile device of passengers detects that a passenger is missing.

Before boarding or upon boarding, the passengers may be provided with information (smartphone application, other communication ways) as to how to report a missing passenger in case of an emergency. Thus, any relative (friend, family, colleague...) may report a passenger missing. Also, the first responders (fire fighter, doctors, police, etc.) can report to the system a missing passenger or report a lost passenger as found.

Prior to the emergency situation, passengers may authorize (or may be requested to authorize) the system to access the data on their phone - potentially during an emergency situation. The system is thus enabled to detect, through text mining or vocal interactions monitoring, that a passenger is missing, simply by detecting for instance, the attempts of his/her relatives to contact him/her. The authorization given to the system can extend to an authorization to override some features of the smartphone (Bluetooth, GPS localization, volume of the speaker, alarm etc.).

According to a preferred embodiment, the AI-based rescue system sends a request to other passenger who have been identified as having been in the vicinity of the lost passenger, through their mobile device, as to whether they have any information to share with respect to the lost passenger, such as the health condition, last known localisation or any other information.

According to a preferred embodiment, the ILTS comprises a counter for counting the passengers boarding the ship, and counting the passengers exiting the ship, and upon a difference, the ILTS informs the lost passenger identification module of the fact that a passenger may be lost.

According to a preferred embodiment, the system comprises a scenario generator which generates, before the occurrence of an event, a series of possible scenarios based on at least one of: the emergency situation type and the related variables, the number and expected localisation of the individuals and the unavailable exit routes obstructed by obstacles, and pre-voyage simulators which feed the database of pre-simulated scenarios by simulating the scenarios generated by the scenario generator, and calculating the death toll and evacuation simulation for various combinations of exit routes, so as to find the optimum routes for a given scenario..

According to a preferred embodiment, the AI-based rescue system further comprises real-time simulators which first compare the real-time situation to any given pre-simulated scenario, and based on the optimum evacuation plan of similar pre-simulated scenario, calculates an optimum evacuation plan for the real-time situation, and preferably enriches the record of pre-simulated scenarios with the newly calculated scenario.

By comparing a real-time situation to already simulated situations, the AI can pick the scenarios corresponding to nearby situations. The AI thus does not start from scratch simulating any possible scenario, but starts with a sample of already optimized paths and data and builds the real-time optimum scenario from these data. The real-time simulation is thus substantially quickened.

According to a preferred embodiment, the real-time simulators simulate future events based on real-time variables, such as at least one of: a fire and/or toxic gases simulator, which calculates the propagation of fire and/or toxic gases, based on location and intensity of fire or gas detected in real-time; a movement simulator, which calculates the future position of individuals based on their physical condition, their family or group specification, and/or their location in real-time measured by indoor location tracking system, and based on crowd movement or probabilistic models; a ship sinking simulator; a congestion optimizer.

The family or group specification can reflect the number of children or elderly people in a group. The behaviour or speed of displacement of such a group can be greatly impacted by the presence of children or elderly people and the system is provided with crowd displacement theory algorithm to take these aspects into consideration.

According to a preferred embodiment, the system further considers: directing passengers to an exit favouriting the weight balance of the ship; the presence of water in the ship altering the capacity of the passengers to move; and/or the addition of new potential exits with new capacity, materialized by the arrival of safety boats on site.

For the sake of clarity, the following terminology is used in the present application: "life boat" or "lifeboat" is intended to designate a small (rigid or inflatable) boat carried aboard a ship for emergency evacuation; a "safety boat" is a boat used to attend a vessel in distress (operated by local rescue services); and "rescue boat" is intended to depict a small boat onboard a safety boat, used by the rescuing team when arriving next to a vessel in distress.

The present invention is extended to not only cover the management of the flow of people on the ship but also the communication and management of the people outside the ship when they have been evacuated on a lifeboat, safety boat or rescue boat. These boats may thus also be provided with the necessary means (detection of the people, communication between the people and the AI-based rescue system).

The system is a fault tolerant distributed system that can dynamically run on different devices (in sequence or in parallel) using one or multiple devices. This is advantageous for a safety system, so that resources of those devices can be used when necessary and/or the resources can be optimised, optionally with a graceful degradation when necessary due to the lack of resources. The system can use different kinds of devices, for instance servers, minicomputers, microcomputers, microcontrollers, desktops, laptops, tablets, or smartphones. Those devices can be located in the passenger ship or any other boats or lifeboats, or safety boats, or devices attached to life buoys, life preserver or life jacket, or devices located in rescue boat. The devices are preferably nearby the ship in distress.

Various ranges of transmission can be used depending on the power of the devices. The ranges depend also on the availability of wireless, such as satellite communication, or radio communication or cellular communication. The system can use an ad-hoc network for the communication between those devices when necessary. For instance, the distributed system, running on one device D (or more devices D1, D2, etc.) that are, for instance, on the vessel in distress, can dynamically be aware of being down within minutes, due to fire sensors sensing that the power supply can be damaged or the device D (or D1, D2, etc.) can be damaged. In that case the system dynamically communicates adequate information with one or more devices (Di, Dj, etc) that are not at risk, so that when the device D (or D1, D2, etc.) is/are damaged, the system transparently continues to run on the other devices (Di, Dj, etc).

For instance, the system can use an agent-based architecture. The other devices (Di, Dj, etc) can have an adequate application pre-loaded, being part of the deployment of the system. This could be due to a safety standard or safety regulation enforcing such pre-loaded application.

According to a preferred embodiment, the real-time simulation is performed sequentially, for instance every 30 seconds, and the evacuation plan is updated accordingly and respective directions are provided accordingly to each passenger for evacuating the ship according to the updated evacuation plan.

The frequency of the simulation can be faster (e.g. every 2 seconds, 5 seconds, 10 seconds). However frequent the simulation is carried out, the system may be prevented from sending contradictory information to passengers too often. For instance, if three successive simulations lead to three different exit paths for a particular passenger, he/she may start to distrust the rescue system and have a level of confidence which is such that the best exit path will not be followed. A real-time simulation frequency of about 10 to about 30 seconds avoids this behaviour while still being frequent enough to ensure the safety of the passengers.

According to a preferred embodiment, the hazardous event is a fire, a gas leak, a nuclear, biological or chemical contamination, a water flood, a terrorist attack, a seism or the like, and the system comprises appropriate detectors for the occurrence, the localisation and the propagation of such hazardous event.

The system is also provided with propagation models to anticipate the localisation and expansion of such a hazardous event.

The invention also relates to a passenger ship comprising a plurality of life boats of pre-determined capacity and a system as in any of the embodiments above, the AI-based rescue system taking into account the pre-determined capacity of each life boat to direct the passengers to appropriate exit routes.

The safety is optimized by computation of a trade-off between the respective distance of a passenger to the exit routes, the time to reach the exit routes and the capacity of the life boats. A weighted combination of factors can be used but the main objective is the prevention of casualties.

According to a preferred embodiment, at least one of the life boats is equipped with a control unit which records the data of the AI-based rescue system and preferably takes over the handling of the emergency situation upon incapacity of the AI-based rescue system to take further action, once the ship has sunk.

According to a preferred embodiment, the AI-based rescue system further handles the movement of the passengers outside the ship until a safe location, preferably by bidirectional transmission of data between the life boats and the ship.

The invention also relates to a computer-implemented method for the routing of people in their way out of a ship, the method being carried out by a system as in any of the embodiments discussed above, the method comprising the steps of: before the occurrence of an event requiring the evacuation of the ship, pre-simulating possible scenarios; during a hazardous event: tracking the position of individuals; simulating in real-time the evolution of the hazardous event and the movement of the passenger; and informing the passenger of their exit path (based on pre-selected path of a pre-computed simulation and based on dynamically and/or locally adapted data); identifying a lost passenger; and assisting a lost passenger in evacuating the ship.

According to a preferred embodiment, the identification of a lost passenger and the assistance to a lost passenger are performed during and/or after the occurrence of the hazardous event.

### Technical advantages

The system and the method of the invention are particularly advantageous through their appropriate management of the available data during emergency, making the best possible use of pre-established data (number of passengers, categories of passengers, positions of the exits and their capacity, pre-simulated scenarios), so that computing capacity and memory can be best used during the occurrence of an emergency situation. In real-time, every second counts and the simulation of the exit paths for thousands of persons towards tens of exits needs an optimisation in a space of several thousands of dimensions. The simulation can take, at best, several hours. By the specific technique of pre-simulation and real-time simulation, the best use can be made of the computing resources.

The system enables also the categorization of the people on board. Crew members, first aid rescuers, fire fighters are allocated different roles and are tagged differently in the system, so that unnecessary instructions are not sent to them, liberating memory and bandwidth capacity for the transmission of other instructions to the passengers in need. The best use is thus made of the transmission capacity of the system.

Also, the invention allows to identify lost passengers, irrespective of whether they bear a computing device or not.

The invention can be applied, but is not limited to, the evacuation of a sinking ship or a ship on fire. There are particular issues at stake when evacuating a sinking ship that are not taken into account with a building evacuation system (sinking angle, exit paths becoming progressively unavailable, etc.). Also, several thousands of people have to be directed towards tens of safe boats with limited capacity. Trained crew members are expected to act according to the standard procedure as well as according to a dynamically evolving situation. As by definition an emergency situation entails unexpected events, the evacuation plan fulfils its duty by evolving dynamically during the emergency situation. All these issues, and more, are appropriately addressed by the system and the method of the invention.

Similarly, the invention can be applied to an offshore platform or any construction that is built over, on or under water.

Alternatively to an emergency situation, the present invention can also be used in a situation where a hostile environment is dynamically detected for man (space, height, air, predator, bacteria, chemicals, ...). The invention can also be applied to animals, such as for instance by directing them with appropriate means (moving targets, odors...) in case of an emergency situation in a zoo, etc.

### Brief description of the figures

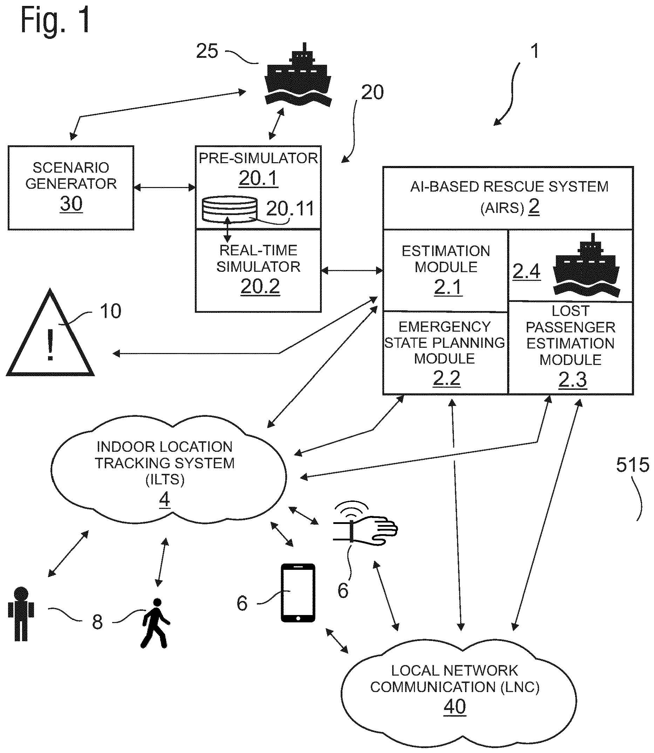

Fig. 1 illustrates synthetically the system of the invention;
Fig. 2 summarizes the main steps of the method according to the invention.

### Detailed description of the figures

The system 1 of the invention comprises an artificial-intelligence-based rescue system, AIRS, 2 which interacts with an Indoor Location Tracking System, ILTS, 4. The ILTS tracks, among others, the location of mobile devices 6 or of passengers 8.

The system may comprise any suitable sensor 10 adapted to detect any possible critical situation such as a fire, a gas leak, a nuclear, biological or chemical contamination, a water flood, a terrorist attack, a seismic situation, etc. The sensor 10 detects the nature of the critical event, and its relevant properties (position, potential evolution in the ship, level of danger, etc.).

In the context of the invention, a "mobile device" may be a computing mobile device (Smartphone, wearable...), a RFID tag, or any other appropriate means carried by an individual and able to be detected in, or in the vicinity of, the ship.

The AI-rescue system 2 provides an interface for a user, preferably in charge of the safety of the people (captain of the ship). The AIRS 2 can prompt the user all the data relative to the evacuation of the ship. This includes the data related to the dynamic tracking of all individuals. The number of lost people and their particulars can be indicated by the AIRS 2 to the user. The AIRS 2 comprises the required components that enable it to plan the evacuation, based on data received from simulators 10.

The AIRS 2 also displays an estimation of the death toll and duration expected for the evacuation. The AIRS 2 can indicate to the user a plurality of potentially best evacuation plan, among which he can choose - or switch in real-time. The AIRS 2 can also display in real-time the actual data related to the evacuation, such as the evacuated number of people, the remaining people to be evacuated.

The AIRS 2 also indicates all variables and parameters of an evacuation plan (which exit is to be taken by whom, the current status of the evacuation, data related to the responder or safety services, etc.).

The AIRS 2 comprises an estimation module 2.1 which estimates the duration of evacuation and death toll for several evacuation plans based on the hazardous event, and which selects or offers the choice to the responsible of the evacuation to select an evacuation plan.

The AIRS 2 further comprises an emergency state planning module 2.2 providing respective directions to each passenger for evacuating the ship according to the selected evacuation plan. The directions can be provided to the passenger through features of the ship (display, smart floor indicators, speakers, alarms, etc.) or through the mobile devices 6 via a local network communication, LNC, 40.

The AIRS 2 is also provided with a lost passenger identification module 2.3 which identifies the fact that a passenger is lost, identifies the lost passenger and/or helps rescuing the lost passenger.

The AIRS 2 may also comprise an updated layout of the ship 2.4.

The ILTS 4 comprises means for localizing the real-time position of each mobile devices and/or a network of cameras and a convolutional neural network analysing data received from the cameras for localizing each passenger through Face-Body-Object recognition. The ILTS 4 can be constantly active, to reduce computation time and resources needed to assess where each passenger is located at the moment of occurrence of an emergency event.

The combination of a technology based on camera surveillance and WIFI detection allows to spot both individuals equipped with detectable mobile device and unequipped with detectable mobile device (device not detectable or no mobile device at all). Once, during boarding or cruise (i.e. before a potential emergency situation), each person detected by the cameras network can be given an identification which can be associated with the identification of the mobile device that this person carries.

Any other technology can complement or be an alternative to the geolocation of the mobile devices: wearables (such as Arduino, Kniwwelino), RFID, badges, biometric reader, ID cards, bracelets, etc.

In order to help the AIRS 2 select an optimum or a selection of sub-optimal evacuation plans, simulators 20 are provided. The simulators 20 comprise a pre-simulator 20.1 for simulating emergency situations before they occur and a real-time simulator 20.2 which communicates with the AIRS 2 during an emergency event.

In practice, the pre-simulator 20.1 and the real-time simulator 20.2 may be the same simulator, only distinguished by the fact that they operate at a different time. A simulator 20.1/20.2 contains several simulators relative to several aspects of several physical data. The present application thus uses equally the singular simulator and the plural simulators.

Based on the choice of plan or any other input from the user in the AIRS 2, the real-time simulator 20.2 will simulate the future course of events, based on real-time variables. The simulators 20 base their calculations on the nature of the critical situation (fire, flood, toxic emanations, etc.), the layout of the ship 25 (fireproof doors, walls made of fire retardants materials, amount of combustible, automatic fire extinguishers, etc.), the quantity of air feeding the fire, data related to the flow of people, etc. Known scientific models can be used and/or adapted to the specific kind of ship. The simulation may be done once, sequentially or continuously.

For example, the simulators 20 may contain a fire or toxic gases simulator. This simulator will simulate the spreading of a fire or of gas. This predication is based on the layout (design, dimensions, materials, fire-proof doors, etc.) of the ship 25 and on known mathematical models.

A people movement simulator may be used. Based for instance on the data communicated by the ILTS 4 and on the routes indicated to the people to exit the ship, the movement simulator can predict where and when each individual will be in the future and until they exit the ship.

A ship sinking simulator may be provided as well. Based on the layout, geometry and weight of the ship, the external conditions (water, wind, temperature, etc.), and/or the position and orientation of the ship, the ship sinking simulator can assess how the ship will sink and which emergency exit should or can be used. The crowd's movement is also influenced by the fact that the ship sinks. Thus, the different simulators work interdependently.

Based on the future location of the people, on the available exits and on the location of the obstacles or events to be avoided, a congestion optimizer can predict potential congestions that may happen. The paths of the people may be adapted accordingly. A congestion avoider dynamic passenger routing is aimed at.

All these real-time simulators provide data to the AIRS 2 and receive data from the AIRS 2.

The real-time simulators 20.2 may use a database of pre-simulated scenario 20.11 to enhance their response time. The pre-simulated scenarios 20.11 are scenarios for which optimal solutions (evacuation plans) have been calculated before the occurrence of a particular event. The pre-simulated scenarios are calculated by pre-simulators 20.1 similar to the examples given above (a fire and toxic gases simulator, a passenger movement simulator and a ship sinking simulator, etc.).

The simulations that are run before the event happens may be used to plan the resources necessary for the ship as for example the number of crew members, based on the layout of the ship and on the tickets sold (manifest), and/or regulations/standards.

The pre-simulations are run for millions of scenarios. As there can be thousands of people in thousands of locations on the boat and there are tens of life boats, the number of combinations to be tested is immense. A scenario is a set of parameters, comprising but not limited to: the kind of critical situation (for instance fire), its characteristics (position, scope, nature, dangerousness), the number and positions of people in the ship, the emergency exits that are unavailable due to the critical situation. The optimum solution(s) for each scenario - i.e. the set of paths to the exit for each person that results in no casualties and/or in the shortest evacuation time - can be simulated and indexed in the database 20.11. This allows to save calculation time during an emergency situation. In any real-time scenario that is close to a pre-simulated scenario, the simulators will be able to use pre-compiled data to help finding the optimum routes. This is done for example by recognizing a similarity between the real situation and one or more pre-simulated scenarios. Thus, if in a real situation, the system recognizes that a couple of pre-simulated scenarios almost match the real-time situation, the system will be able to start the calculations based on the pre-simulated paths, and can optimize the solution to the real-time scenario based on the solutions of pre-simulated similar scenarios. As the scenarios may be complex (position and movement of thousands of people, multiplied by the number of possible paths to the possible exits), the time gain can be substantial. With conventional computer power, several days are required to identify the optimum evacuation plan, and this duration is not acceptable during an emergency situation.

To recognize the similarity between a real situation and a pre-simulated situation, the system may compare the parameters (those listed in each scenario as mentioned above).

The millions of scenarios are generated by a scenario generator 30. The generator 30 can take into account many variables and all possible values of these variables, as for instance: the kind of critical event happening can be a variable; the number, presence and position of the people; the kind of emission that results from the critical event; and the impossibility to leave the ship through one or more of the emergence exits.

The generator 30 can define the sampling size (for instance Latin hypercube, or a sampling size of a fixed pre-determined number, such as 30 for example) and index the criteria of sampling which could then be retrieved during an emergency event to refine the simulation on a much smaller working space.

The AIRS 2 also integrates the fact that some people may behave differently than others. This is the case for instance for crew members on a ship. These people have particular responsibilities and capabilities. They are trained to be less perturbated by an emergency situation. They are expected to follow orders (whereas non-trained people may have more erratic behaviour) in a systematic, foreseeable, methodical, rational manner, using behaviour dictated by training. The crew can provide messages to the other individuals. They may provide input to the AIRS. They may be led to a particular exit, for instance, not the closest, in order to help drive a safe boat.

The people in the ship may be given any appropriate characteristics or exceptions. The constraints of the people are taken into consideration. For instance, disabled people will not be directed to an emergency exit which requires climbing steps. Family may be preferably kept together, or alternatively may preferably directed each towards the closest exit.

The AIRS 2 may use a Local Network Communication system 40, LNC, such as Mobile Ad hoc NETworking (MANET) to interact with mobile devices of individuals and/or to locate them (alternatively to the ILTS discussed above).

Communication between near smartphones could be done through BLE (Bluetooth Low Energy) with the constraints of the authentication mechanism.

LNC 40 reunites people based on acquaintance factor, family groups, people who know each other and a group of colleagues, team member, etc. It is thus a local digital network that may work like a local social media.

Through the LNC 40 can be broadcasted instructions to crew members (assignments) / passengers (evacuation route) / first responders (lost passenger) / local authorities (metrics, status), in real-time and/or once the critical event is finished. Feedback can also be requested by the AIRS 2 to the various parties involved.

The AIRS 2 also manages the retrieval of lost individuals during and after the occurrence of the emergency situation.

An AI-based algorithm can use text mining through the reports and comments interchanging between people (prior acknowledgment to access data upon emergency can be made mandatory to board the ship).

Example of social relationships can be (between users or between a user the AI):
- I can ***identify*** a friend when I see it;
- I know his ***location*** (now, or its usual location, e.g. the swimming pool at 10, the cinema at 22, ...);
- I know the abilities needed for escaping, (e.g. disabilities, health weaknesses, etc.) and problems that he could have to escape;
- I can receive instructions to help rescuing him; ... <to be filled-in>

Other examples could read:
- I don't see the person XXX among the evacuees who was sitting next to me
- I can't reach my friend via phone who was in the same ship with me
- I am on the rescue boat number 123 and seeing a woman sinking in the water
- I know that my friend usually goes to gym around the same hour that the ship started to sink...

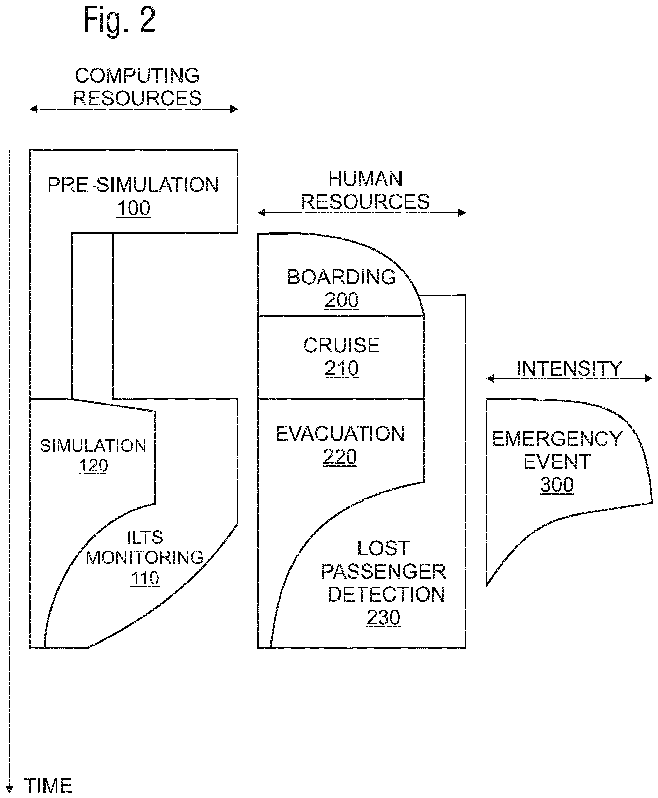

Fig. 2 shows a summary of the chronology of events.

Step 100 consists in the pre-simulation of scenarios generated by the scenario generator 30. Based on the expected manifest, the pre-simulation 100 can assist the ship owner to decide the number of crew members legally required. The pre-simulated scenarios each comprise: a list of available and unavailable routes; death toll, evacuation duration, IF/THEN rules recommendation (checklist specific to each scenario if any).

During boarding 200, the passengers may be invited to install an application or to authorize some interactions between the AIRS 2 and their mobile device 6. The passengers may be invited to wear a detectable wearable. The ILTS may start facial-body-recognition when boarding and may count the passengers.

The pre-simulation 100 can keep on running even during the cruise 210. Based on the trends of movements (e.g. who is where at what time of the day), further finest pre-simulation can be run during cruise by learning the habits of in a given cruise trip. The pre-simulated records 20.11 is then fed with data during cruise and can have at each instant a pre-selected optimal options even before running the real-time simulation.

Upon occurrence of an emergency situation 300, real-time simulation 110 is run potentially with interactions with the user responsible of the evacuation. The simulation 110 is made by simulators 20 interacting with AIRS 2, on the basis of data received from the ILTS 4. The various data collected by the ILTS 4 or appropriate sensors can be: sinking angle of the ship; fire size, location and heat level; validation of the critical event by the captain, available maritime evacuation system information via sensors and internal communication, real-time passenger and crew location, AI-based (LNC) localisation of crew members and passengers, passenger congestion levels, obstacle information.

During the real-time simulation 110, the real-time simulator 20.2 defines an optimum real-time scenario: list of available and unavailable routes, dynamic expected death toll, dynamic evacuation duration, dynamic routing.

During the real-time simulation 110, the AIRS 2 carries out at least some of the following: predicts the upcoming obstacles hindering the availability of the exits, instructs the passengers of the evacuation routes and the assignments to the crew members, assist lost passengers, shares information to family or relatives of an identified lost passenger, broadcasts the evacuation plan on displays of the ship or any other appropriate indicating means (interactive floor, blinking lights, etc), broadcast text and voices through speakers, interact with local authorities and/or first responders.

The evacuation of the ship 220 starts shortly after the emergency event 300.

Simultaneously to and/or after the evacuation, the detection and retrieval of lost passengers 230 is carried out. This can also be done independently of the occurrence of an emergency, i.e. during regular cruise, for instance to retrieve a lost child or assist a lost passenger unable to relocate his/her cabin.

Fig. 2 is organized as three columns. In the first column (steps 100 to 120), the width of the steps represents the computing resources involved in the step. In the second column (steps 200 to 230), the width of the steps represents the human resources involved. The width of the third column (step 300) represents the intensity of the event, for instance the scope of the fire. Those are merely illustrative examples and the width are not represented at scale.

In summary, the system of the invention is particularly innovative over the prior art as, among others, it ensures a safer evacuation of a ship, less demanding in computing resources, through at least the following aspects:
- The ILTS technology, detecting position and condition of passengers, even without detectable mobile device;
- An Artificial Intelligence-based calculation suggesting solutions which cannot be anticipated or may not be thought through by the user responsible of the evacuation;
- The spotting of lost persons;
- The use of smart floor lights: the corridor or floor lights can be lit in the vicinity of a lost person or a person wanting to evacuate to assist him/her to follow the best path to exit;
- The use of Natural Language Processing interactions with people (audio signal communicated to people, and speech recognition responses);
- The distinction of groups of people (family, friends, etc.), for example based on ticket registers. A lost person among a group can be redirected towards his group, during, or if not safe, after the evacuation of the ship. And this can be done automatically by the AIRS;
- The real-time simulators use pre-simulated scenarios and their pre-calculated solutions to save time and lives during evacuation. AI is thus used to accelerate the calculations via simulators and optimizers used to positively affect the elapsed time;
- In case of an emergency, regular itinerary tools (google map and similar) is not adapted because not everybody should be directed to the same exit (congestion), neither to the closest exit. Anti-intuitive solutions may save lives. Also, the instructions in case of panic should be as simple as possible because it is known that the brain may not be able to deal with complex instructions when one is under panic. The system of the invention deals with all these issues;
- The system of the invention also distinguishes between crew/staff of a ship and passengers/occupants/audience. The former is trained and knows the exits of the ship, whereas the latter will expect to the be guided by the former in case of an evacuation. The system of the invention takes these differences into consideration when addressing instructions to, and when expecting feedback from one or another of these people;
- Going one step further, the system can allocate specific roles to specific people. For instance, someone with a medical or military training can be addressed in a different way than a child. Those with specific abilities may be assigned specific tasks. This categorisation of people can be integrated straight from the pre-simulation procedure as it may be known in advance (when a participant books its seat to a voyage);
- The scenario generator uses linear and non-linear interpolation techniques;
- The simulators are integrated into a module. They can communicate with each other. It is indeed relevant to simulate properly the crowd's movements in accordance with the location and propagation of the danger; the instability of a sinking ship may also be impacted or impact the zone of danger and the movement of the people. Hence, the simulations are not run independently but with interdependence;
- The system comprises an inference-based scenario update which dynamically updates and tunes scenario dataset based on configurations. The AI can thus produce new features based on the deep learning classification techniques to enrich the scenario combinations produced by the scenario generator;
- Real-time scenarios can be recorded and can feed the simulators of other similar systems. Ships of comparable properties can then share experience in a big data environment which enhances the respective simulators;
- Based on fine combinations of different modules, fully automated AIRS is making the best decisions based on availabilities and limitations;
- Congestions are reduced and anticipated by balancing the routing and/or providing optimised trade-offs between distance, time and capacities of the life boats, aiming at maximizing the safety factor (i.e. the smallest possible casualties or injuries);
- Metrics of the events are measured: Before, during and after emergency, the key performance metrics of evacuation (egress time, death toll, number of egressed people, number of trapped people and unavailable exits) can be measured. Thanks to pre-computation before event, and computation during event, and also the tuned hazardous scenario, the choice of metrics to be monitored and the values of the metrics can be more accurate than in a non-pre-simulated scenario, whereby the entirety of the computation capacity will be used for the emergency route planning;
- Dynamic Planning/Routing: As instant / unpredictable obstacles and limitations during evacuation may happen, the system provides dynamic emergency plans rather than static plans. The processes and consequently the computation are updated based on input data from sensors, evacuees, crew, etc;
- Indoor location spotter offers a spotting of the location, condition and movement direction of a person. A combined system of an AI-based person counter, and spotter surveillance cameras and WIFI-based indoor person spotter help localize both people equipped with mobile device or not. The indoor positioning system provides a technical mechanism to assess the position of a person or a group of persons in real-time with a good accuracy. In case of an emergency or rescue action, the knowledge of the location of persons with a good precision (space and time), is vital for the responsible(s) of the evacuation. Therefore, the management of the evacuation processes will be more efficient by allowing smart updates of the evacuation plan taking into account the reality of the persons location (evacuation paths changes, split or creation of groups, etc.);
- The positioning system enables the communication between several persons according to their positioning and/or their relationships (friends, family, etc.). Should global Wi-Fi not work for any reasons (fire, water, technical issues, etc.), the positioning system will rely on local ad-hoc network to make effective the communication between the persons and enables the sending of rescue instructions, according to the global view of the evacuation. In addition, by using analysis of past locations (if the person gives their consent), their current location can be estimated in order to help the responsible of the evacuation.

## Claims

1. System (1) for assisting the routing of passengers (8) in their way out of a ship, the system (1) comprising:
- a digital layout (25) of the ship;
- a hazardous event detection device (10), detecting the occurrence and the localisation of a hazardous event;
- a plurality of mobile devices (6);
- a local network communication system, LNC (40), permitting communication between the mobile devices (6);
- an indoor location tracking system, ILTS (4), comprising means for localizing the real-time position of each mobile devices and/or a network of cameras and a convolutional neural network analysing data received from the cameras for localizing each passenger (8) through Face-Body-Object recognition;
- a database (20.11) of pre-simulated scenarios of evacuation, comprising an optimum evacuation plan based on the digital layout (25) of the ship, properties of the hazardous event and the localisation of the passengers (8);
- an AI-based rescue system (2) comprising:
- an estimation module (2.1) which estimates the duration of evacuation and death toll for several evacuation plans, based on the hazardous event, on the real-time position of the passengers and on the pre-simulated scenarios, and selects an optimal evacuation plan and/or offers the responsible of the evacuation to select an evacuation plan potentially amongst a pre-selection of evacuation plans established by the estimation module;
- an emergency state planning module (2.2) providing respective directions to each passenger for evacuating the ship according to the selected evacuation plan;
- a lost passenger identification module (2.3) which identifies a lost passenger based on a comparison between the real-time positions of the passengers and the selected evacuation plan, and/or based on data retrieved from the LNC (40);
wherein upon detection of a lost passenger, the AI-based rescue system (2) performs at least one of the following actions:
- informing the responsible of the evacuation of the identification and possibly the location of the lost passenger;
- instructing crew members to assist the lost passenger;
- broadcasting oral or optical assistance to the lost passenger through the speakers of the ship or through floor lights appropriately lit up;
- broadcasting the physical characteristics of the lost passenger;
- updating the evacuation plan based on the location and physical condition of the lost passenger.

2. System (1) according to claim 1, **characterized in that** a passenger (8) is identified as lost if at least one of the following conditions is met:
- the ILTS (4) detects that the passenger (8) remains immobile for a duration exceeding a pre-determined threshold;
- the detected movements of the passenger (8) show that he/she is neither following instructions towards the designated exit nor towards any other available exits;
- the AI-based rescue system (2) is alerted by other passengers or crew members that a passenger is lost;
- the passenger (8) reports himself/herself as lost;
- a text mining tool analysing text exchanges on mobile device (6) of passengers (8) detects that a passenger is missing.

3. System (1) according to claim 1 or 2, **characterized in that** the AI-based rescue system (2) sends a request to other passengers who have been identified as having been in the vicinity of the lost passenger, through their mobile device (6), as to whether they have any information to share with respect to the lost passenger, such as the health condition, last known localisation or any other information.

4. System (1) according to any of claims 1 to 3, **characterized in that** the ILTS (4) comprises a counter for counting the passengers (8) boarding the ship, and counting the passengers (8) exiting the ship, and upon a difference, the ILTS (4) informs the lost passenger identification module of the fact that a passenger may be lost.

5. System (1) according to any of claims 1 to 4, **characterized in that** the system comprises a scenario generator (30) which generates, before the occurrence of an event, a series of possible scenarios based on at least one of: the emergency situation type and the related variables, the number and expected localisation of the individuals and the unavailable exit routes obstructed by obstacles, and pre-voyage simulators (20.1) which feed the database of pre-simulated scenarios (20.11) by simulating the scenarios generated by the scenario generator (30), and calculating the death toll and evacuation simulation for various combinations of exit routes, so as to find the optimum routes for a given scenario.

6. System (1) according to claim 5, **characterized in that** system further comprises real-time simulators (20.2) which first compare the real-time situation to any given pre-simulated scenario, and based on the optimum evacuation plan of similar pre-simulated scenario, calculates an optimum evacuation plan for the real-time situation, and preferably enriches the record of pre-simulated scenarios with the newly calculated scenario.

7. System (1) according to claim 6, **characterized in that** the real-time simulators (20.2) simulate future events based on real-time variables, such as at least one of:
- a fire and/or toxic gases simulator, which calculates the propagation of fire and/or toxic gases, based on location and intensity of fire or gas detected in real-time;
- a movement simulator, which calculates the future position of individuals based on their physical condition, their family or group specification, and/or their location in real-time measured by indoor location tracking system, and based on crowd movement or probabilistic models;
- a ship sinking simulator;
- a congestion optimizer.

8. System (1) according to any of claims 1 to 7, **characterized in that** the system further considers:
- directing passengers to an exit favouriting the weight balance of the ship;
- the presence of water in the ship altering the capacity of the passengers to move; and/or
- the addition of new potential exits with new capacity, materialized by the arrival of safety boats on site.

9. System (1) according to any of the preceding claims, **characterized in that** the real-time simulation is performed sequentially, for instance every 30 seconds, and the evacuation plan is updated accordingly and respective directions are provided accordingly to each passenger for evacuating the ship according to the updated evacuation plan.

10. System (1) according to any of the preceding claims, **characterized in that** the hazardous event is a fire, a gas leak, a nuclear, biological or chemical contamination, a water flood, a terrorist attack, a seism or the like, and the system comprises appropriate detectors for the occurrence, the localisation and the propagation of such hazardous event.

11. Passenger ship comprising a plurality of life boats of pre-determined capacity and **characterized by** a system according to any of claims 1 to 10, the AI-based rescue system taking into account the pre-determined capacity of each life boat to direct the passengers to appropriate exit routes.

12. Passenger ship according to claim 11, **characterized in that** at least one of the life boats is equipped with a control unit which records the data of the AI-based rescue system and preferably takes over the handling of the emergency situation upon incapacity of the AI-based rescue system to take further action, once the ship has sunk.

13. Passenger ship according to claim 11 or 12, wherein the AI-based rescue system further handles the movement of the passengers outside the ship until a safe location, preferably by bidirectional transmission of data between the life boats and the ship.

14. Computer-implemented method for the routing of people in their way out of a ship, the method being carried out by a system (1) according to any of the previous claims, the method comprising the steps of:
- before the occurrence of an event (300) requiring the evacuation of the ship, pre-simulating (100) possible scenarios;
- during a hazardous event:
- tracking (110) the position of individuals;
- simulating (120) in real-time the evolution of the hazardous event and the movement of the passenger; and
- informing the passenger of their exit path;
- identifying (230) a lost passenger; and
- assisting a lost passenger in evacuating the ship.

15. Method according to claim 14, wherein the identification of a lost passenger and the assistance to a lost passenger are performed during and/or after the occurrence of the hazardous event.

## Patentansprüche

1. System (1) zur Hilfestellung beim Verlassen eines Schiffes durch Passagiere (8), wobei das System (1) Folgendes umfasst:
- ein digitales Layout (25) des Schiffes;
- eine Vorrichtung zur Erkennung gefährlicher Ereignisse (10), die das Auftreten und die Lokalisierung eines gefährlichen Ereignisses erkennt;
- eine Vielzahl von mobilen Geräten (6);
- ein lokales Netzwerkkommunikationssystem, LNC (40), das die Kommunikation zwischen den mobilen Geräten (6) ermöglicht;
- ein Indoor Location Tracking System, ILTS (4), das Mittel zur Lokalisierung der Echtzeitposition jedes mobilen Geräts und/oder ein Netzwerk von Kameras und ein neuronales Faltungsnetzwerk umfasst, das die von den Kameras empfangenen Daten analysiert, um jeden Passagier (8) durch Gesichts-Körper-Objekt-Erkennung zu lokalisieren;
- eine Datenbank (20.11) mit vorab simulierten Evakuierungsszenarien, die einen optimalen Evakuierungsplan auf der Grundlage des digitalen Layouts (25) des Schiffs, der Eigenschaften des gefährlichen Ereignisses und der Lokalisierung der Passagiere (8) umfasst;
- ein KI-basiertes Rettungssystem (2), das Folgendes umfasst:
- ein Schätzungsmodul (2.1), das die Dauer der Evakuierung und die Zahl der Todesopfer für mehrere Evakuierungspläne auf der Grundlage des gefährlichen Ereignisses, der Echtzeitposition der Passagiere und der vorab simulierten Szenarien schätzt und einen optimalen Evakuierungsplan auswählt und/oder den für die Evakuierung Verantwortlichen anbietet, einen Evakuierungsplan aus einer Vorauswahl von Evakuierungsplänen auszuwählen, die von dem Schätzungsmodul erstellt wurde;
- ein Modul zur Planung des Notzustands (2.2), das jedem Passagier entsprechende Anweisungen zur Evakuierung des Schiffes gemäß dem ausgewählten Evakuierungsplan gibt;
- ein Modul zur Identifizierung verlorener Passagiere (2.3), das einen verlorenen Passagier auf der Grundlage eines Vergleichs zwischen den Echtzeitpositionen der Passagiere und dem ausgewählten Evakuierungsplan und/oder auf der Grundlage von Daten, die von der LNC (40) abgerufen wurden, identifiziert;
wobei das KI-basierte Rettungssystem (2) bei Erkennung eines verlorenen Passagiers mindestens eine der folgenden Aktionen durchführt:
- Informieren der für die Evakuierung Verantwortlichen über die Identifizierung und möglicherweise den Standort des verlorenen Passagiers;
- Anweisung an die Besatzungsmitglieder, dem verlorenen Passagier zu helfen;
- Senden von verbaler oder optischer Hilfe an den verlorenen Passagier über die Lautsprecher des Schiffes oder über entsprechend beleuchtete Bodenlampen;
- Senden der physischen Merkmale des verlorenen Passagiers;
- Aktualisieren des Evakuierungsplans auf der Grundlage des Standorts und des physischen Zustands des verlorenen Passagiers.

2. System (1) nach Anspruch 1, **dadurch gekennzeichnet, dass** ein Passagier (8) als verloren identifiziert wird, wenn mindestens eine der folgenden Bedingungen erfüllt ist:
- das ILTS (4) erkennt, dass der Passagier (8) für eine Dauer unbeweglich bleibt, die einen vorher festgelegten Schwellenwert überschreitet;
- die erkannten Bewegungen des Passagiers (8) zeigen, dass er/sie weder den Anweisungen in Richtung des vorgesehenen Ausgangs noch in Richtung anderer verfügbarer Ausgänge folgt;
- das KI-gestützte Rettungssystem (2) wird von anderen Passagieren oder Besatzungsmitgliedern alarmiert, dass ein Passagier verloren ist;
- der Passagier (8) meldet sich selbst als verloren;
- ein Text-Mining-Tool, das den Textaustausch auf dem Mobilgerät (6) der Passagiere (8) analysiert, erkennt, dass ein Passagier fehlt.

3. System (1) nach Anspruch 1 oder 2, **dadurch gekennzeichnet, dass** das KI-gestützte Rettungssystem (2) eine Anfrage an andere Passagiere, die als in der Nähe des verlorenen Passagiers befindlich identifiziert wurden, über deren Mobilgerät (6) sendet, ob sie irgendwelche Informationen in Bezug auf den verlorenen Passagier mitteilen können, wie z.B. den Gesundheitszustand, den letzten bekannten Aufenthaltsort oder irgendwelche anderen Informationen.

4. System (1) nach einem der Ansprüche 1 bis 3, **dadurch gekennzeichnet, dass** das ILTS (4) einen Zähler zum Zählen der Passagiere (8), die das Schiff betreten, und zum Zählen der Passagiere (8), die das Schiff verlassen, umfasst, und dass das ILTS (4) bei einer Abweichung das Modul zur Identifizierung verlorener Passagiere über die Tatsache informiert, dass ein Passagier verloren sein könnte.

5. System (1) nach einem der Ansprüche 1 bis 4, **dadurch gekennzeichnet, dass** das System einen Szenario-Generator (30) umfasst, der vor dem Eintreten eines Ereignisses eine Reihe möglicher Szenarien erzeugt, die auf mindestens einem der folgenden Elemente basieren: dem Typ der Notsituation und den damit verbundenen Variablen, der Anzahl und dem erwarteten Aufenthaltsort der Personen und den nicht verfügbaren, durch Hindernisse versperrten Ausstiegswegen, und Simulatoren (20. 1), die die Datenbank der vorab simulierten Szenarien (20.11) versorgen, indem sie die vom Szenario-Generator (30) erzeugten Szenarien simulieren und die Zahl der Todesopfer und die Evakuierungssimulation für verschiedene Kombinationen von Ausstiegsrouten berechnen, um so die optimalen Routen für ein bestimmtes Szenario zu finden.

6. System (1) nach Anspruch 5, **dadurch gekennzeichnet, dass** das System ferner Echtzeitsimulatoren (20.2) umfasst, die zunächst die Echtzeitsituation mit einem beliebigen vorher simulierten Szenario vergleichen und auf der Grundlage des optimalen Evakuierungsplans eines ähnlichen vorher simulierten Szenarios einen optimalen Evakuierungsplan für die Echtzeitsituation berechnen und vorzugsweise den Datensatz der vorher simulierten Szenarien mit dem neu berechneten Szenario anreichern

7. System (1) nach Anspruch 6, **dadurch gekennzeichnet, dass** die Echtzeitsimulatoren (20.2) zukünftige Ereignisse auf der Basis von Echtzeitvariablen simulieren, wie z.B. mindestens einen von:
- einem Feuer- und/oder Giftgassimulator, der die Ausbreitung von Feuer und/oder giftigen Gasen auf der Grundlage des Ortes und der Intensität des in Echtzeit entdeckten Feuers oder Gases berechnet;
- einem Bewegungssimulator, der die zukünftige Position von Personen auf der Grundlage ihres körperlichen Zustands, ihrer Familien- oder Gruppenspezifikation und/oder ihres von einem Indoor-Ortungssystem in Echtzeit gemessenen Standorts und auf der Grundlage von Massenbewegungen oder probabilistischen Modellen berechnet;
- einem Schiffsuntergangssimulator;
- einem Stauoptimierer.

8. System (1) nach einem der Ansprüche 1 bis 7, **dadurch gekennzeichnet, dass** das System außerdem Folgendes berücksichtigt:
- das Leiten von Passagieren zu einem Ausgang, der das Gewichtsgleichgewicht des Schiffes begünstigt;
- das Vorhandensein von Wasser im Schiff, das die Bewegungskapazität der Passagiere verändert; und/oder
- das Hinzufügen neuer potenzieller Ausgänge mit neuer Kapazität, die durch das Eintreffen von Sicherheitsbooten vor Ort entsteht.

9. System (1) nach einem der vorhergehenden Ansprüche, **dadurch gekennzeichnet, dass** die Echtzeitsimulation sequentiell, beispielsweise alle 30 Sekunden, durchgeführt wird und der Evakuierungsplan entsprechend aktualisiert wird und jedem Passagier entsprechende Anweisungen zur Evakuierung des Schiffes gemäß dem aktualisierten Evakuierungsplan gegeben werden.

10. System (1) nach einem der vorhergehenden Ansprüche, **dadurch gekennzeichnet, dass** das gefährliche Ereignis ein Feuer, ein Gasaustritt, eine nukleare, biologische oder chemische Kontamination, eine Überschwemmung, ein Terroranschlag, ein Erdbeben oder dergleichen ist und das System geeignete Detektoren für das Auftreten, die Lokalisierung und die Ausbreitung eines solchen gefährlichen Ereignisses umfasst.

11. Passagierschiff mit einer Vielzahl von Rettungsbooten mit vorbestimmter Kapazität, **gekennzeichnet durch** ein System nach einem der Ansprüche 1 bis 10, wobei das KI-gestützte Rettungssystem die vorbestimmte Kapazität jedes Rettungsbootes berücksichtigt, um die Passagiere zu geeigneten Ausstiegswegen zu leiten.

12. Passagierschiff nach Anspruch 11, **dadurch gekennzeichnet, dass** mindestens eines der Rettungsboote mit einer Steuereinheit ausgestattet ist, die die Daten des KI-gestützten Rettungssystems aufzeichnet und vorzugsweise die Handhabung der Notsituation übernimmt, wenn das KI-gestützte Rettungssystem nicht mehr in der Lage ist, weitere Maßnahmen zu ergreifen, sobald das Schiff gesunken ist.

13. Passagierschiff nach Anspruch 11 oder 12, wobei das KI-gestützte Rettungssystem außerdem die Bewegung der Passagiere außerhalb des Schiffes bis zu einem sicheren Ort übernimmt, vorzugsweise durch bidirektionale Übertragung von Daten zwischen den Rettungsbooten und dem Schiff.

14. Computer-implementiertes Verfahren zum Leiten von Personen beim Verlassen eines Schiffes, wobei das Verfahren von einem System (1) nach einem der vorhergehenden Ansprüche ausgeführt wird, wobei das Verfahren die folgenden Schritte umfasst:
- vor dem Eintreten eines Ereignisses (300), das die Evakuierung des Schiffes erfordert, eine Vorab-Simulation (100) möglicher Szenarien;
- während eines gefährlichen Ereignisses:
- Verfolgen (110) der Position von Personen;
- Simulieren (120) der Entwicklung des gefährlichen Ereignisses und der Bewegung des Passagiers in Echtzeit; und
- Informieren des Passagiers über seinen Ausstiegsweg;
- Identifizieren (230) eines verlorenen Passagiers; und
- Unterstützen eines verlorenen Passagiers bei der Evakuierung des Schiffs.

15. Verfahren nach Anspruch 14, wobei die Identifizierung eines verlorenen Passagiers und die Hilfe für einen verlorenen Passagier während und/oder nach dem Auftreten des gefährlichen Ereignisses durchgeführt werden.

## Revendications

1. Système (1) d'aide à l'acheminement des passagers (8) lors de leur évacuation d'un navire, ledit système (1) comprenant :
- un plan numérique (25) du navire ;
- un dispositif de détection d'événements dangereux (10) permettant de détecter l'apparition et la localisation d'un événement dangereux ;
- une pluralité de dispositifs mobiles (6) ;
- un système de communication en réseau local (*en anglais*, local network communication system - LNC) (40), permettant la communication entre les mobiles (6);
- un système de positionnement en intérieur (en anglais, indoor location tracking system
- ILTS) (4), comprenant des moyens pour localiser la position en temps réel de chaque dispositif mobile et/ou un réseau de caméras et un réseau neuronal convolutif analysant les données reçues des caméras pour localiser chaque passager (8) en utilisant une technologie de reconnaissance de Visages, Corps et Objets ;
- une base de données (20.11) de scénarios d'évacuation pré-simulés, comprenant un plan d'évacuation optimal basé sur le plan numérique (25) du navire, les propriétés de l'événement dangereux et la localisation des passagers (8) ;
- système de sauvetage basé sur l'intelligence artificielle (2) comprenant :
- un module d'estimation (2.1) qui estime la durée de l'évacuation et le nombre de décès pour plusieurs plans d'évacuation, en fonction de l'événement dangereux, de la position en temps réel des passagers et des scénarios pré-simulés, et sélectionne un plan d'évacuation optimal et/ou offre au responsable de l'évacuation la possibilité de sélectionner un plan d'évacuation potentiellement parmi une présélection de plans d'évacuation établie par le module d'estimation ;
- un module de planification des mesures en cas d'urgence (2.2) fournissant à chaque passager des instructions pour évacuer le navire selon le plan d'évacuation sélectionné ;
- un module d'identification des passagers perdus (2.3) qui identifie un passager perdu sur la base d'une comparaison entre les positions en temps réel des passagers et le plan d'évacuation sélectionné, et/ou sur la base de données provenant du LNC (40) ;
dans lequel, lors de la détection d'un passager perdu, le système de sauvetage basé sur l'intelligence artificielle (2) effectue au moins une des actions suivantes :
- informe le responsable de l'évacuation de l'identification et éventuellement la localisation du passager perdu ;
- charge les membres de l'équipage d'aider le passager perdu ;
- fournit au passager perdu une assistance orale ou optique à travers des messages diffusés par les haut-parleurs du navire ou par un éclairage de plancher approprié ;
- diffuse les caractéristiques physiques du passager perdu ;
- met à jour le plan d'évacuation en fonction de la localisation et de l'état physique du passager perdu.

2. Système (1) selon la revendication 1, **caractérisé en ce qu'**un passager (8) est identifié comme perdu si au moins une des conditions suivantes est remplie :
- le système de positionnement en intérieur (4) détecte que le passager (8) reste immobile pendant une durée dépassant un seuil prédéterminé ;
- les mouvements détectés du passager (8) montrent qu'il/elle ne suit pas les instructions de se diriger vers la sortie désignée ou vers toute autre sortie disponible ;
- le système de sauvetage basé sur l'intelligence artificielle (2) est alerté par d'autres passagers ou membres de l'équipage qu'un passager s'est perdu ;
- le passager (8) se déclare perdu(e) ;
- un outil de fouille de textes analysant les échanges de textes sur les mobiles (6) des passagers (8) détecte qu'il manque un passager.

3. Système (1) selon l'une des revendications 1 ou 2, **caractérisé en ce que** le système de sauvetage basé sur l'intelligence artificielle (2) envoie aux autres passagers qui ont été identifiés comme ayant été à proximité du passager perdu, par l'intermédiaire de leur mobile (6), une demande de renseignements visant à apprendre s'ils ont des informations à partager en ce qui concerne le passager perdu, telles que l'état de santé, la dernière localisation connue ou toute autre information.

4. Système (1) selon l'une quelconque des revendications 1 à 3, **caractérisé en ce que** le système de positionnement en intérieur (4) comprend un compteur pour compter les passagers (8) qui montent à bord du navire, et les passagers (8) qui en descendent et, lorsqu'il constate une différence, le système de positionnement en intérieur (4) informe le module d'identification des passagers perdus du fait qu'un passager peut être perdu.

5. Système (1) selon l'une quelconque des revendications 1 à 4, **caractérisé en ce que** le système comprend un générateur de scénarios (30) qui génère, avant la survenance d'un événement, une série de scénarios possibles sur la base d'au moins un des éléments suivants : le type de situation d'urgence et les variables associées, le nombre et la localisation prévue des individus et les voies de sortie de secours indisponibles obstruées par des obstacles et des simulateurs de pré-voyage (20. 1) qui alimentent la base de données de scénarios pré-simulés (20.11) en simulant les scénarios générés par le générateur de scénarios (30), et en calculant le nombre de décès et la simulation d'évacuation pour diverses combinaisons de voies de sortie de secours, de manière à trouver les itinéraires d'évacuation optimaux pour un scénario donné.

6. Système (1) selon la revendication 5, **caractérisé en ce que** le système comprend en outre des simulateurs en temps réel (20.2) qui comparent d'abord la situation en temps réel à tout scénario pré-simulé donné et, sur la base du plan d'évacuation optimal du scénario pré-simulé similaire, calculent un plan d'évacuation optimal pour la situation en temps réel, et enrichissent de préférence la base de données des scénarios pré-simulés avec le scénario nouvellement calculé.

7. Système (1) selon la revendication 6, **caractérisé en ce que** les simulateurs en temps réel (20.2) simulent des événements futurs sur la base de variables en temps réel, telles qu'au moins un des éléments suivants :
- un simulateur d'incendie et/ou de gaz toxiques, qui calcule la propagation de l'incendie et/ou des gaz toxiques, sur la base de la localisation et de l'intensité de l'incendie ou du gaz détectées en temps réel ;
- un simulateur de mouvement, qui calcule la position future des individus en fonction de leur condition physique, de la spécification de leur famille ou de leur groupe et/ou de leur localisation en temps réel mesurée par un système de positionnement en intérieur, et en fonction du mouvement de la foule ou de modèles probabilistes ;
- un simulateur de chavirement du navire ;
- un optimiseur de congestion.

8. Système (1) selon l'une quelconque des revendications 1 à 7, **caractérisé en ce que** le système prend également en compte les aspects suivants :
- l'acheminement des passagers vers une sortie favorisant l'équilibre du navire ;
- la présence d'eau dans le navire altérant la capacité des passagers à se déplacer ; et/ou
- l'ajout de nouvelles sorties potentielles avec une nouvelle capacité, matérialisée par l'arrivée sur place de canots de sauvetage.

9. Système (1) selon l'une quelconque des revendications précédentes, **caractérisé en ce que** la simulation en temps réel est effectuée de manière séquentielle, par exemple, toutes les 30 secondes, et le plan d'évacuation est mis à jour en conséquence et des instructions respectives sont fournies en conséquence à chaque passager pour évacuer le navire conformément au plan d'évacuation mis à jour.

10. Système (1) selon l'une quelconque des revendications précédentes, **caractérisé en ce que** l'événement dangereux est un incendie, une fuite de gaz, une contamination nucléaire, biologique ou chimique, une inondation, une attaque terroriste, un séisme ou similaire, et le système comprend des détecteurs appropriés pour l'apparition, la localisation et la propagation d'un tel événement dangereux.

11. Navire à passagers comprenant une pluralité de canots de sauvetage de capacité prédéterminée et **caractérisé par** un système selon l'une quelconque des revendications 1 à 10, le système de sauvetage basé sur l'intelligence artificielle acheminant les passagers vers les voies de sortie de secours appropriées tenant compte de la capacité prédéterminée de chaque canot de sauvetage.

12. Navire à passagers selon la revendication 11, **caractérisé en ce qu'**au moins un des canots de sauvetage est équipé d'une unité de commande qui enregistre les données provenant du système de sauvetage basé sur l'intelligence artificielle et, de préférence, prend en charge la gestion de la situation d'urgence lorsque le système de sauvetage basé sur l'intelligence artificielle devient incapable de prendre d'autres mesures, une fois que le navire a coulé.

13. Navire à passagers selon l'une des revendications 11 ou 12, dans lequel le système de sauvetage basé sur l'intelligence artificielle dirige en outre le déplacement des passagers en dehors du navire jusqu'à un endroit sûr, de préférence au moyen d'une transmission bidirectionnelle de données entre les canots de sauvetage et le navire.

14. Méthode mise en oeuvre par ordinateur pour l'acheminement de personnes lors de leur évacuation d'un navire, la méthode étant exécutée par un système (1) selon l'une quelconque des revendications précédentes, et comprenant les étapes suivantes :
- avant la survenance d'un événement (300) exigeant l'évacuation du navire, effectuer une pré-simulation (100) des scénarios possibles ;
- au cours d'un événement dangereux :
- suivre (110) la position des personnes ;
- simuler (120) en temps réel l'évolution de l'événement dangereux et le déplacement du passager ; et
- informer le passager de la voie de sortie à suivre ;
- identifier (230) un passager perdu ; et
- aider un passager perdu à évacuer le navire.

15. Méthode selon la revendication 14, dans laquelle l'identification d'un passager perdu et l'octroi de l'assistance à un passager perdu ont lieu pendant et/ou après la survenance de l'événement dangereux.
